(19)

Europäisches
Patentamt
European
Patent Office
Office européen
des brevets

(11) **EP 4 249 613 A1**

(12) **EUROPEAN PATENT APPLICATION**
published in accordance with Art. 153(4) EPC

(43) Date of publication:
**27.09.2023 Bulletin 2023/39**

(21) Application number: **21919496.6**

(22) Date of filing: **22.09.2021**

(51) International Patent Classification (IPC):
*C21D 8/12* (2006.01)      *C22C 38/00* (2006.01)
*C22C 38/60* (2006.01)      *H01F 1/147* (2006.01)

(52) Cooperative Patent Classification (CPC):
**C21D 8/12; C22C 38/00; H01F 1/147;** C22C 38/60;
Y02P 10/20

(86) International application number:
**PCT/JP2021/034899**

(87) International publication number:
**WO 2022/153605 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021   JP 2021006014**

(71) Applicant: **JFE Steel Corporation
Tokyo 100-0011 (JP)**

(72) Inventors:
• **ODACHI Masanori
  Tokyo 100-0011 (JP)**
• **OMURA Takeshi
  Tokyo 100-0011 (JP)**
• **ICHIHARA Yoshihisa
  Tokyo 100-0011 (JP)**

(74) Representative: **Grünecker Patent- und
Rechtsanwälte
PartG mbB
Leopoldstraße 4
80802 München (DE)**

(54) **GRAIN-ORIENTED ELECTRICAL STEEL SHEET AND PRODUCTION METHOD THEREFOR**

(57)     Provided is a grain-oriented electrical steel sheet that can benefit from the iron loss improving effect by groove formation while effectively suppressing a decrease in magnetic flux density. A grain-oriented electrical steel sheet comprises predetermined linear grooves, wherein in each linear groove, a proportion of predetermined flat portions to an entire length of the linear groove is 30 % or more and 90 % or less, the number of flat portions each of which is continuous for a predetermined length is 10 or more per 100 cm$^2$ surface area, and a ratio of ten-point average roughness Rzjis to average depth D is 0.1 or more and 1 or less.

*FIG. 1*

Average groove depth 28 $\mu$m

Position in linear groove direction ($\mu$m)

**Description**

TECHNICAL FIELD

The present disclosure relates to an excellent grain-oriented electrical steel sheet that is used as an iron core of a transformer and whose magnetic domain refining effect is not lost due to stress relief annealing, and a production method therefor.

BACKGROUND

Grain-oriented electrical steel sheets that contain Si and whose crystal orientation is (110)[001] orientation or (100)[001] orientation have excellent soft magnetic property, and thus are widely used as various iron core materials in a commercial frequency domain. An important property required of electrical steel sheets is iron loss typically expressed as $W_{17/50}$ (W/kg), that is, a loss in the case of magnetization with a maximum magnetic flux density of 1.7 T at a frequency of 50 Hz. The use of a material with a low $W_{17/50}$ value can significantly reduce iron loss in AC current at 50 Hz, which is a main commercial frequency domain for generators and transformers.

The need to develop a material having such iron loss reduction effect has been increasing every year.

A common method of reducing the iron loss of grain-oriented electrical steel sheets is magnetic domain refining. In particular, a heat resistant magnetic domain refining method is known that forms grooves extending in a direction intersecting the rolling direction on the surface of a steel sheet to utilize the magnetic domain refining effect of the magnetostatic energy by the free magnetic poles formed on the sidewalls of the grooves.

Methods of forming grooves on the surface of a steel sheet include projection roll stamping, electrolytic etching, and laser processing. Optimization of the depth and width of grooves, the interval between grooves, the angle between the groove walls and the steel sheet surface, etc. has been proposed.

For example, JP 4719319 B2 (PTL 1) discloses devising the shape of grooves formed on the surface of a steel sheet by electrolytic etching. JP 2018-131680 A (PTL 2) discloses forming linear grooves by laser processing and further forming recesses at the bottom of the grooves. JP 2010-168615 A (PTL 3) discloses a method of suppressing processing strain when forming grooves by machining.

CITATION LIST

Patent Literature

PTL 1: JP 4719319 B2
PTL 2: JP 2018-131680 A
PTL 3: JP 2010-168615 A

SUMMARY

(Technical Problem)

There is recently a demand for a grain-oriented electrical steel sheet that not only has low iron loss $W_{17/50}$ in a magnetized region with a maximum magnetic flux density of 1.7 T which determines the steel sheet grade as mentioned above but also has excellent iron loss in a region magnetized with a low magnetizing force to have a low magnetic flux density of 1.0 T to 1.5 T and excellent magnetic properties such as magnetic flux density Bs in a region magnetized with a high magnetizing force of 800 A/m.

It is known that, with the heat resistant magnetic domain refining technique by groove formation, deepening the grooves is effective in enhancing the magnetic domain refining effect. However, such a means has a problem in that the magnetic flux density decreases because the volume of the steel substrate decreases by the volume of the grooves. The method described in PTL 1 still has this problem. In the case of devising the processing method as in PTL 2 or PTL 3, problems such as lower productivity and higher production cost remain.

It could therefore be helpful to provide a grain-oriented electrical steel sheet having improved iron loss without a decrease in magnetic flux density while maintaining productivity, by devising a method for electrolytic etching when forming grooves in a steel sheet.

It could also be helpful to provide a production method for the grain-oriented electrical steel sheet.

(Solution to Problem)

We repeatedly conducted experiments of forming linear grooves in steel sheets after final cold rolling by various methods and evaluating the magnetic properties after secondary recrystallization, and found out that steel sheets having linear grooves with a flat and slightly rough groove bottom surface shape have greater improvement in iron loss than degradation in magnetic flux density. Upon carefully examining them, we discovered an appropriate shape of the groove bottom surface.

The present disclosure is based on these discoveries. We thus provide:

1. A grain-oriented electrical steel sheet comprising linear grooves extending in a direction intersecting a rolling direction, on one side thereof, wherein, in each linear groove, a proportion of flat portions to an entire length of the linear groove is 30 % or more and 90 % or less, the flat portions each being defined as a portion in which an absolute value of a difference in depth from an average depth D of the linear groove is less than or equal to 1/10 of the average depth D, the number of flat portions each of which is continuous for a length that is at least 1.3 times an average width W of the linear groove is 10 or more per 100 cm$^2$ surface area, and a ratio of ten-point average roughness Rzjis on a roughness curve at a width center position of the linear groove to the average depth D, expressed as Rzjis/D, is 0.1 or more and 1 or less.

2. The grain-oriented electrical steel sheet according to 1., wherein the following formula (4):

$$Va \leq Pa \leq 15 \ \mu m \qquad \qquad \dots (4)$$

is satisfied, where Pa is an average of absolute values of elevations of five peaks from a highest peak to a fifth highest peak on the roughness curve at the width center position of the linear groove with respect to the average depth D, and Va is an average of absolute values of elevations of five valleys from a lowest valley to a fifth lowest valley on the roughness curve with respect to the average depth D.

3. A production method for a grain-oriented electrical steel sheet, comprising subjecting a grain-oriented electrical steel material at least to final cold rolling, and further to secondary recrystallization annealing, wherein after the final cold rolling and before the secondary recrystallization annealing, an insulating masking agent is applied to a surface of a steel sheet, the masking agent is linearly removed in a direction intersecting a rolling direction by laser irradiation in an inert atmosphere, and thereafter electrolytic etching is performed to form linear grooves.

4. The production method for a grain-oriented electrical steel sheet according to 3., wherein the steel sheet is put into an electrolytic bath to perform the electrolytic etching within 10 seconds after the masking agent is linearly removed.

(Advantageous Effect)

Since iron loss can be effectively improved by the magnetic domain refining effect through the grooves formed on the steel sheet surface, the grain-oriented electrical steel sheet can benefit from the iron loss improving effect by groove formation without a decrease in magnetic flux density.

BRIEF DESCRIPTION OF THE DRAWINGS

In the accompanying drawings:

FIG. 1 is a diagram explaining the shape of a groove bottom formed by electrolytic etching;
FIG. 2 is a diagram illustrating flat portions of the groove bottom illustrated in FIG. 1; and
FIG. 3 is a diagram illustrating Rzjis of the groove bottom illustrated in FIG. 1.

DETAILED DESCRIPTION

The presently disclosed techniques will be described in detail below.

Heat resistant magnetic domain refining by formation of linear grooves (hereafter simply referred to as "grooves" unless otherwise noted) as in the present disclosure occurs by the following mechanism: As a result of the magnetostatic energy increasing due to the magnetic poles formed on the side surfaces of the grooves, new 180° magnetic domain walls for canceling this form and the magnetic domain width decreases. In the case where the magnetic domain width decreases (i.e. magnetic domain refining occurs), the moving distance of the magnetic domain walls when the steel sheet is magnetized shortens, so that the energy loss during the magnetic domain wall movement, i.e. the iron loss, decreases.

This mechanism requires the formation of magnetic poles. For this, it is important to create an interface between substances that differ in magnetic permeability. The foregoing technique using grooves utilizes the difference in magnetic permeability between iron and air. There is thus a problem in that, when the grooves are formed, the effective magnetic permeability of the steel sheet decreases by the volume of the grooves and the value of magnetic flux density Bs when magnetized with 800 A/m, which is another index of magnetic properties, decreases.

Accordingly, forming a large number of magnetic poles in order to enhance the magnetic domain refining effect is disadvantageous in that the effective magnetic permeability decreases and the magnetic flux density decreases. Moreover, since the magnetic poles form only on the side surfaces of the grooves, in the case where the grooves are formed on one side (one surface) of the steel sheet, the magnetic domain refining effect by groove formation is unlikely to spread to the center of the steel sheet in the thickness direction or the other side (the other surface) of the steel sheet.

To solve these problems, we examined a groove shape, in particular a groove bottom surface shape, that maximizes the foregoing effect by groove formation without causing any disadvantage. In detail, upon observing the groove shapes made by the conventional groove formation techniques, we noticed that the groove depth varies and this variation influences the iron loss, and considered that further reduction in iron loss is possible by making the groove shape closer to the ideal groove shape that minimizes the decrease in the effective magnetic permeability of the steel sheet while sufficiently achieving the magnetic domain refining effect.

We consequently discovered that it is effective to smooth the bottom surface of the linear groove and simultaneously provide uneven portions (concave and convex parts) that satisfy a predetermined condition.

In detail, we discovered that an appropriate way of solving the foregoing problems and effectively exhibiting the magnetic domain refining effect by groove formation is to satisfy the following two requirements: providing flat portions with little depth variation on the bottom surface of the groove for at least a certain length; and providing uneven portions with large depth variation on the bottom surface of the groove besides the flat portions.

The reasons for limiting each constituent element in the present disclosure will be described below.

First, linear grooves in the present disclosure are formed on one side (one surface) of the steel sheet. By simply forming the grooves in the present disclosure on one side of the steel sheet, the magnetic domain refining effect by groove formation spreads to the center of the steel sheet in the thickness direction or the other side (the other surface) of the steel sheet.

The intervals between the linear grooves are not limited, but are preferably in the range of 2.0 mm to 5.0 mm.

It is desirable that the bottom surface of each linear groove in the present disclosure is basically flat. If the absolute value of the variation (d - D) of the measured value d of the groove depth (simply referred to as "groove depth d" in the present disclosure) with respect to the average depth D of the linear groove (hereafter simply referred to as "average depth D") is more than 1/10 of the average depth D, the iron loss tends not to decrease even when the groove depth d is increased. The average depth D is the average value of the groove depths d measured at the center in the groove width direction, and the variation of the groove depth d is the difference of the groove depth d measured at the center in the groove width direction from the average depth D.

Although the mechanism of the foregoing phenomenon related to this variation (d - D) (i.e. the tendency that, if the variation is large, the iron loss does not decrease even when the groove depth is increased) is not clear, it is presumed that, in the case where the variation of the groove depth d is large in the same groove, shallow parts of the groove where the magnetic domain refining is insufficient and deep parts of the groove where the hysteresis loss increases due to the decrease in steel substrate volume are both present, so that the iron loss cannot be sufficiently reduced even with the average groove depth that is considered optimal.

In the present disclosure, each portion of the linear groove in which the absolute value of the variation (d - D) is less than or equal to 1/10 of the average depth D, i.e. each portion of the linear groove satisfying the following formula (1):

$$-0.10\mathrm{D} \le (\mathrm{d} - \mathrm{D}) \le 0.10\mathrm{D} \qquad \ldots (1)$$

is defined as "flat portion". Of these flat portions, the number of flat portions each continuous in the extending direction of the linear groove for a length L that is at least 1.3 times the average width W, i.e. the number of flat portions each having the continuous length L satisfying the following formula (2):

$$1.3\mathrm{W} \le \mathrm{L} \qquad \ldots (2)$$

needs to be 10 or more in any 100 cm$^2$ surface area of the steel sheet. If the number of such portions is less than 10, the flat portions of the groove bottom surface are short, which makes it impossible to minimize the decrease in the effective magnetic permeability of the steel sheet while sufficiently achieving the magnetic domain refining effect. Any 100 cm² surface area of the steel sheet mentioned above can be regarded as representing the whole when 20 parts are sampled per 1 m² of the steel sheet.

Moreover, the proportion of the flat portions to the entire groove length of each groove needs to be 30 % or more and 90 % or less. The proportion is desirably 40 % or more. The proportion is desirably 90 % or less.

Although the requirements for the grooves in the present disclosure are specified for each groove, it is sufficient that 90 % of all grooves satisfy the requirements. For example, in the case where the total number of grooves is 100, at least 90 grooves satisfy the requirements.

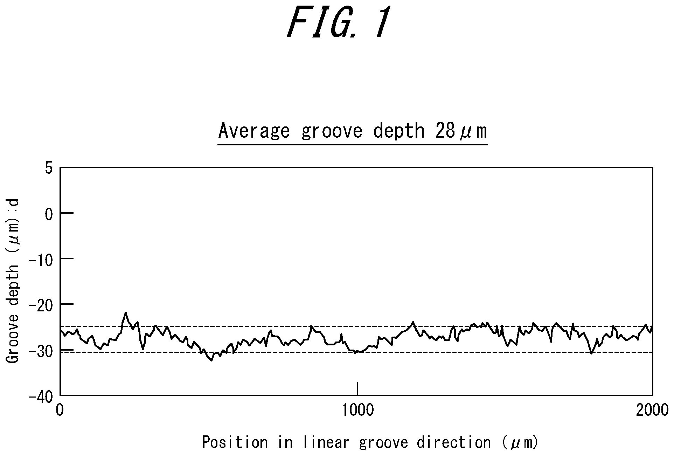

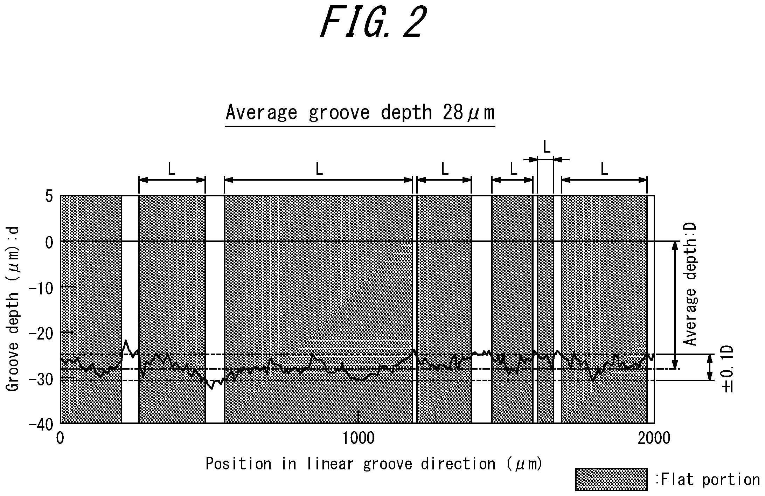

FIG. 1 to FIG. 3 illustrate an example of measuring the groove depth in the extending direction of a linear groove. FIG. 1 illustrates the measurement result of the groove depth. FIG. 2 illustrates the foregoing "flat portions" added to the measurement result in FIG. 1. "L" in FIG. 2 indicates a section in which the flat portion is continuous.

In the present disclosure, it is necessary to form flat portions having L satisfying the following formula (2) in relation to W, as mentioned above:

$$1.3W \leq L \qquad \qquad \ldots (2).$$

When W is greater, the steel substrate volume is smaller. There is thus a need to reduce portions where the groove bottom surface has large variation to reduce the decrease in steel substrate volume or to reduce the sections not deep enough for magnetic domain refining.

Meanwhile, the bottom surface of the linear groove in the present disclosure is not completely flat but has portions other than flat portions, that is, uneven portions (concave and convex parts) having a predetermined height or depth. As mentioned above, if the groove is flat, the effect when the depth of the groove formed on the surface of the steel sheet is optimal is likely to be great. This, however, narrows the allowable range and increases the cost of production management. In view of this, rough portions are provided in the flat groove to thus achieve both the magnetic domain refining effect by groove formation and the stabilization of the properties.

The "uneven portion" in the present disclosure is defined as a portion of the linear groove in which the absolute value of the variation (d - D) is more than 1/10 of the average depth D. In the present disclosure, the ten-point average roughness Rzjis in accordance with JIS B 0601-2001 is less than or equal to 100 % of the average depth D.

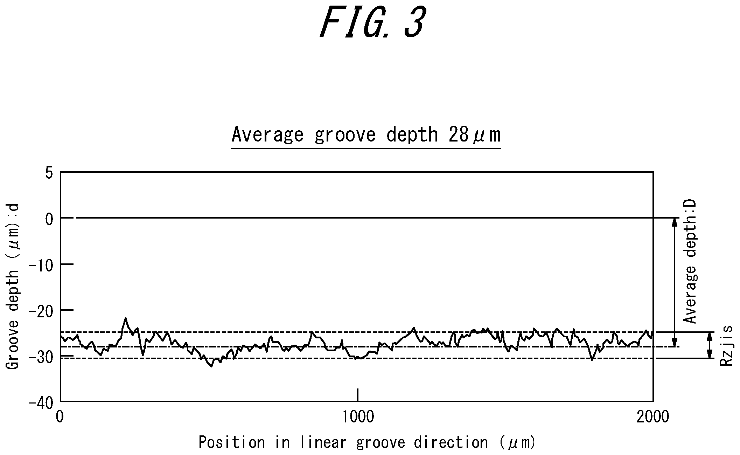

Specifically, as illustrated in FIG. 3, a range of 2 mm length is randomly selected from the profile curve at the center of the groove. In this range, the ten-point average roughness Rzjis in accordance with JIS B 0601-2001 needs to be 0.1 or more and 1 or less with respect to the average depth D, that is, needs to satisfy the following formula (3):

$$0.1 \leq Rzjis/D \leq 1 \qquad \qquad \ldots (3).$$

The iron loss increases if the formula (3) is not satisfied, although the reason for this is not clear. Rzjis is desirably 20 % or more of the average depth D. Rzjis is desirably 50 % or less of the average depth D. In other words, Rzjis/D is desirably 0.2 or more. Rzjis/D is desirably 0.5 or less.

It is also desirable that the following formula (4):

$$Va \leq Pa \leq 15 \ \mu m \qquad \qquad \ldots (4)$$

is satisfied, where Pa is the average of the absolute values of the elevations of the five peaks from the highest peak to the fifth highest peak on the roughness curve at the width center position of the linear groove with respect to the average depth, and Va is the average of the absolute values of the elevations of the five valleys from the lowest valley to the fifth lowest valley on the roughness curve with respect to the average depth. If Pa and Va are more than 15 μm, the variation from the target groove depth is large, making it difficult to achieve the desired magnetic domain refining effect locally. Furthermore, since the valleys cause a decrease in the ratio of iron in the steel sheet, it is desirable that Va ≤ Pa. In the present disclosure, the "peak" refers to the highest point (top) of a convex part on the roughness curve, and the "valley" refers to the lowest point of a concave part on the roughness curve. The "absolute value of elevation" refers to the absolute value of the distance of the highest point or the lowest point from the average depth D. While this regulation is measured on the roughness curve at the cross section of the groove center in each groove, it is desirable that at least one groove out of ten grooves satisfies the formula (4).

The composition of the steel sheet used in the present disclosure is not limited as long as it is a composition used for conventionally known grain-oriented electrical steel sheets. A typical composition is as follows.

[Chemical composition]

Si: 2.0 mass% or more and 5.0 mass% or less

Si is an element necessary to increase the resistivity of the steel and reduce the iron loss. If the Si content is less than 2.0 mass%, the effect is insufficient. If the Si content is more than 5.0 mass%, the workability decreases and production by rolling is difficult. The Si content in the steel sheet used in the present disclosure is therefore preferably in the range of 2.0 mass% to 5.0 mass%. The Si content is more preferably in the range of 2.5 mass% to 4.5 mass%.

The elements other than Si contained in the steel sheet are not limited, and conventionally known grain-oriented electrical steel sheet components that cause secondary recrystallization in a normal production process of grain-oriented electrical steel sheets are contained in normal amounts. The balance other than such components in normal amounts consists of Fe and inevitable impurities.

A production method for a grain-oriented electrical steel sheet according to the present disclosure will be described below.

According to the present disclosure, in a production method for a grain-oriented electrical steel sheet wherein a steel material for a grain-oriented electrical steel sheet (a grain-oriented electrical steel material) is subjected to conventionally known processes such as hot rolling, subjected to final cold rolling, and further subjected to secondary recrystallization annealing followed by insulating tension coating treatment, after the final cold rolling and before the secondary recrystallization annealing, an insulating masking agent is applied to the surface of the steel sheet, the masking agent is linearly removed in a direction intersecting the rolling direction by laser irradiation in an inert atmosphere, and thereafter electrolytic etching is performed to form linear grooves.

The intersecting direction is a direction at an angle within the range of ±30 degrees with respect to the direction perpendicular (orthogonal) to the rolling direction.

In the present disclosure, in the process of linearly removing the insulating masking agent by laser irradiation after applying and drying the masking agent, the laser irradiation is performed in an inert atmosphere. This is intended to suppress the formation of an oxide film on the steel sheet surface between the laser irradiation and the electrolytic etching and prevent the groove shape formed by the electrolytic etching from being not uniform, thus flattening the groove bottom.

It is desirable that the area where the laser irradiation is performed and the electrolytic bath where the electrolytic etching is performed are close to each other.

It is also desirable to put the steel sheet into the electrolytic bath within 10 seconds after the steel sheet is irradiated with laser and the masking agent is linearly removed, in order to flatten the groove bottom.

Rzjis, Pa, and Va related to roughness can be optimized by adjusting the electrolytic current and time during the etching.

EXAMPLES

Examples in the present disclosure will be described below.

In this example, a steel slab containing the components shown in Table 1 with the balance consisting of Fe and inevitable impurities was hot rolled into a hot-rolled steel sheet according to a conventional method, and further subjected to cold rolling twice with intermediate annealing therebetween to obtain a cold-rolled steel sheet having a thickness of 0.23 mm. After this, a sample was cut from the center part of the steel sheet except 100 mm or more from both edges of the steel sheet in the width direction, to collect a cold-rolled steel sheet having a width of 30 mm and a length of 280 mm.

[Table 1]

Table 1

| Chemical composition (mass%) | | | | | | |
|---|---|---|---|---|---|---|
| C | Si | Mn | Al | N | S | Se |
| 0.055 | 3.2 | 0.13 | 0.022 | 0.007 | 0.003 | 0.021 |

Subsequently, the following three conditions were used as groove formation treatment conditions:

(I) Apply an insulating masking agent to the steel sheet surface, linearly remove the masking agent in the direction orthogonal to the rolling direction by laser irradiation in an inert atmosphere, and then form grooves by electrolytic etching.

(II) Form grooves by pressing a linear projection roll.

(III) Perform no groove formation treatment.

The target width of the linear grooves was 40 $\mu$m to 80 $\mu$m, and the linear grooves were formed in the direction orthogonal to the width direction of the steel sheet at intervals of 2.0 mm to 5.0 mm in the rolling direction. The electrolytic etching treatment was performed in a NaCl bath. When forming the grooves by electrolytic etching, Rzjis, Pa, and Va of the linear grooves were adjusted by adjusting the electrolytic current and the electrolytic time, and the target groove depth was adjusted in the range of 20 $\mu$m to 28 $\mu$m. Moreover, the proportion of the flat portions to the entire length of the linear groove was changed by adjusting the laser power and the time exposed to air from the laser irradiation to the electrolytic etching. Ten test pieces were prepared for each treatment condition and groove depth.

These test pieces were each subjected to primary recrystallization annealing treatment also serving as decarburization annealing, coated with an annealing separator containing MgO as a main component, subjected to final annealing, and then coated with an insulating coating to obtain a test piece for magnetic property evaluation. After the test piece was subjected to strain relief annealing at 800 °C for 2 hours, the iron loss $W_{17/50}$ of the test piece was measured by a single sheet magnetic property measurement test, and the difference from the iron loss in the case where no groove formation treatment was performed (condition (III)) was evaluated as iron loss improvement $\Delta W_{17/50}$. The groove shape was measured by a laser microscope.

The groove shape was measured, and each portion where the absolute value of the variation (d - D) was less than or equal to 1/10 of the average depth D was taken to be a flat portion. The lengths of the flat portions were added up for each groove in which these portions existed, and the result of dividing the obtained sum by the groove length (entire groove length) was taken to be the proportion (%) of the flat portions.

In addition, to convert the number of flat portions satisfying the formula (2) among the flat portions into the number per 100 $cm^2$ surface area of the steel sheet, the average number of ten flat portions observed in the test piece was multiplied by 119 (= 100/(0.3 $\times$ 2.8)).

As can be understood from the relationship between the groove shape and the iron loss shown in Table 2, the magnetic domain refining effect by groove formation can be stabilized and the iron loss can be further improved by appropriately controlling the proportion of flat portions to the entire length of the linear groove, the roughness Rzjis, etc.

Table 2

| Formation method | Interval (mm) | Average depth D (μm) | Average width W (μm) | Flat portion Proportion (%) | Number of portions with length of 1.3W or *1 more | Rzjis/D | Va (μm) | Pa (μm) | Va≤Pa | Pa≤15 | Va≤15 | Iron loss improvement $\Delta W_{17/50}$ (W/kg) | Remarks |
|---|---|---|---|---|---|---|---|---|---|---|---|---|---|
| (I) Electrolytic etching | 3.0 | 20 | 80 | 15 | 8 | 0.77 | 14 | 16 | ○ | × | ○ | 0.116 | Comparative Example |
| | 3.0 | 20 | 80 | 10 | 6 | 0.69 | 16 | 17 | ○ | × | × | 0.101 | Comparative Example |
| | 3.0 | 20 | 70 | 22 | 52 | 0.63 | 13 | 18 | ○ | × | ○ | 0.122 | Comparative Example |
| | 5.0 | 20 | 60 | 33 | 7 | 0.83 | 14 | 19 | ○ | × | ○ | 0.091 | Comparative Example |
| | 3.0 | 20 | 80 | 31 | 587 | 0.56 | 13 | 11 | × | ○ | ○ | 0.141 | Example |
| | 3.0 | 20 | 80 | 31 | 480 | 0.56 | 16 | 13 | × | ○ | × | 0.138 | Example |
| | 3.0 | 20 | 80 | 34 | 850 | 0.53 | 10 | 11 | ○ | ○ | ○ | 0.146 | Example |
| | 3.0 | 20 | 80 | 62 | 449 | 0.30 | 5 | 7 | ○ | ○ | ○ | 0.158 | Example |
| | 3.0 | 20 | 80 | 88 | 200 | 0.13 | 2 | 3 | ○ | ○ | ○ | 0.155 | Example |
| (II) Projection roll | 3.0 | 20 | 80 | 100 | 10 | 0.01 | 0.1 | 0.2 | ○ | ○ | ○ | 0.136 | Comparative Example |
| | 3.0 | 28 | 80 | 100 | 10 | 0.01 | 0.1 | 0.2 | ○ | ○ | ○ | 0.101 | Comparative Example |
| (I) Electrolytic etching | 2.0 | 20 | 80 | 64 | 829 | 0.53 | 10 | 11 | ○ | ○ | ○ | 0.161 | Example |
| | 5.0 | 20 | 80 | 61 | 355 | 0.53 | 10 | 11 | ○ | ○ | ○ | 0.152 | Example |
| | 3.0 | 28 | 80 | 55 | 337 | 0.24 | 6 | 8 | ○ | ○ | ○ | 0.166 | Example |
| | 3.0 | 20 | 40 | 62 | 1030 | 0.23 | 4 | 5 | ○ | ○ | ○ | 0.157 | Example |
| (III) No groove | - | - | - | - | - | - | - | - | - | - | - | 0 | Comparative Example |

Linear groove — Roughness curve

| Linear groove | | | | | | | | | | | | Iron loss improvement $\Delta W_{17/50}$ (W/kg) | Remarks |
|---|---|---|---|---|---|---|---|---|---|---|---|---|---|
| | | | | Flat portion | | Roughness curve | | | | | | | |
| Formation method | Interval (mm) | Average depth D ($\mu$m) | Average width W ($\mu$m) | Proportion (%) | Number of portions with length of 1.3W or *1 more | Rzjis/D | Va ($\mu$m) | Pa ($\mu$m) | Va≤ Pa | Pa≤ 15 | Va≤ 15 | | |
| *1 per 100cm$^2$ surface area of steel sheet | | | | | | | | | | | | | |

**Claims**

1. A grain-oriented electrical steel sheet comprising

   linear grooves extending in a direction intersecting a rolling direction, on one side thereof,
   wherein, in each linear groove,
   a proportion of flat portions to an entire length of the linear groove is 30 % or more and 90 % or less, the flat portions each being defined as a portion in which an absolute value of a difference in depth from an average depth D of the linear groove is less than or equal to 1/10 of the average depth D,
   the number of flat portions each of which is continuous for a length that is at least 1.3 times an average width W of the linear groove is 10 or more per 100 cm$^2$ surface area, and
   a ratio of ten-point average roughness Rzjis on a roughness curve at a width center position of the linear groove to the average depth D, expressed as Rzjis/D, is 0.1 or more and 1 or less.

2. The grain-oriented electrical steel sheet according to claim 1, wherein the following formula (4):

$$Va \leq Pa \leq 15 \ \mu m \qquad \qquad \ldots (4)$$

   is satisfied, where Pa is an average of absolute values of elevations of five peaks from a highest peak to a fifth highest peak on the roughness curve at the width center position of the linear groove with respect to the average depth D, and Va is an average of absolute values of elevations of five valleys from a lowest valley to a fifth lowest valley on the roughness curve with respect to the average depth D.

3. A production method for a grain-oriented electrical steel sheet, comprising

   subjecting a grain-oriented electrical steel material at least to final cold rolling, and further to secondary recrystallization annealing,
   wherein after the final cold rolling and before the secondary recrystallization annealing, an insulating masking agent is applied to a surface of a steel sheet, the masking agent is linearly removed in a direction intersecting a rolling direction by laser irradiation in an inert atmosphere, and thereafter electrolytic etching is performed to form linear grooves.

4. The production method for a grain-oriented electrical steel sheet according to claim 3, wherein the steel sheet is put into an electrolytic bath to perform the electrolytic etching within 10 seconds after the masking agent is linearly removed.

# FIG. 1

**Average groove depth 28 $\mu$ m**

Y-axis: Groove depth ($\mu$ m) :d

X-axis: Position in linear groove direction ($\mu$ m)

# FIG. 2

Average groove depth 28 μm

# FIG. 3

Average groove depth 28 μm

## INTERNATIONAL SEARCH REPORT

| International application No. |
| --- |
| **PCT/JP2021/034899** |

### A. CLASSIFICATION OF SUBJECT MATTER

*C21D 8/12*(2006.01)i; *C22C 38/00*(2006.01)i; *C22C 38/60*(2006.01)n; *H01F 1/147*(2006.01)i
FI: C22C38/00 303U; C21D8/12 D; H01F1/147 175; C22C38/60

According to International Patent Classification (IPC) or to both national classification and IPC

### B. FIELDS SEARCHED

Minimum documentation searched (classification system followed by classification symbols)

C21D8/12; C21D9/46; C22C38/00-C22C38/60; H01F1/147; C25F3/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2016/129235 A1 (JFE STEEL CORP) 18 August 2016 (2016-08-18) claims, paragraphs [0038]-[0066] | 3-4 |
| A | | 1-2 |
| Y | JP 2016-532776 A (POSCO) 20 October 2016 (2016-10-20) claims, paragraphs [0054]-[0057] | 3-4 |
| A | | 1-2 |
| A | JP 1-252728 A (KAWASAKI STEEL CORP) 09 October 1989 (1989-10-09) claims, p. 4, lower right column, line 15 to p. 6, upper left column, line 14 | 1-4 |
| A | WO 2016/171124 A1 (NIPPON STEEL & SUMITOMO METAL CORP) 27 October 2016 (2016-10-27) entire text, all drawings | 1-4 |
| A | JP 2007-169762 A (JFE STEEL CORP) 05 July 2007 (2007-07-05) entire text, all drawings | 1-4 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 November 2021** | **07 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/034899**

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2020-514533 A (POSCO) 21 May 2020 (2020-05-21)<br>entire text, all drawings | 1-4 |

Form PCT/ISA/210 (second sheet) (January 2015)

# EP 4 249 613 A1

**INTERNATIONAL SEARCH REPORT**
Information on patent family members

International application No.

**PCT/JP2021/034899**

| Patent document cited in search report | | | Publication date (day/month/year) | Patent family member(s) | | | Publication date (day/month/year) |
|---|---|---|---|---|---|---|---|
| WO | 2016/129235 | A1 | 18 August 2016 | US | 2018/0017868 | A1 | |
| | | | | claims, paragraphs [0066]-[0096] | | | |
| | | | | EP | 3257973 | A1 | |
| | | | | CN | 107208304 | A | |
| | | | | KR | 10-2017-0109665 | A | |
| | | | | RU | 2017131493 | A | |
| JP | 2016-532776 | A | 20 October 2016 | US | 2016/0177413 | A1 | |
| | | | | claims, paragraphs [0053]-[0056] | | | |
| | | | | WO | 2015/012562 | A1 | |
| | | | | EP | 3025797 | A1 | |
| | | | | KR | 10-2015-0012205 | A | |
| | | | | CN | 105451902 | A | |
| | | | | SG | 11201600558V | A | |
| | | | | PL | 3025797 | T3 | |
| | | | | TR | 201808211 | T4 | |
| JP | 1-252728 | A | 09 October 1989 | US | 5185043 | A | |
| | | | | claims, column 6, line 39 to column 8, line 39 | | | |
| | | | | EP | 323155 | A1 | |
| | | | | DE | 3880654 | T2 | |
| | | | | CA | 1334370 | C | |
| | | | | KR | 10-1989-0010278 | A | |
| WO | 2016/171124 | A1 | 27 October 2016 | US | 2018/0066334 | A1 | |
| | | | | entire text, all drawings | | | |
| | | | | EP | 3287538 | A1 | |
| | | | | KR | 10-2017-0107084 | A | |
| | | | | CN | 107406935 | A | |
| | | | | BR | 112017018677 | A2 | |
| | | | | RU | 2682363 | C1 | |
| | | | | PL | 3287538 | T3 | |
| JP | 2007-169762 | A | 05 July 2007 | (Family: none) | | | |
| JP | 2020-514533 | A | 21 May 2020 | WO | 2018/117672 | A1 | |
| | | | | entire text, all drawings | | | |
| | | | | KR | 10-2018-0074131 | A | |
| | | | | CN | 110088312 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4719319 B
- JP 2018131680 A
- JP 2010168615 A